# EUROPEAN PATENT SPECIFICATION

(11) **EP 1 986 891 B1**
(45) Date of publication and mention of the grant of the patent: **10.03.2010**
(21) Application number: 07703463.5
(22) Date of filing: 14.02.2007
(51) Int. Cl.: B60R 21/09

(54) **SYSTEM TO DISCONNECT A CONTROL PEDAL OF A DEVICE FROM THE DEVICE WHERETO THE PEDAL IS CONNECTED**
SYSTEM ZUM TRENNEN EINES STEUERPEDALS EINER VORRICHTUNG VON EINER VORRICHTUNG, MIT DER DAS PEDAL VERBUNDEN IST
SYSTEME POUR DECONNECTER UNE PEDALE DE COMMANDE D'UN DISPOSITIF DEPUIS LE DISPOSITIF OU LA PEDALE EST CONNECTEE

(30) Priority: 21.02.2006 ES 200600403
(43) Date of publication of application: 05.11.2008
(73) Proprietor: Flexngate Automotive Iberica, S.A., 08520 Les Franqueses Del Valles (ES)
(72) Inventor: NICOLAS DOMINGO, Joaquin, E-08520 Les Franqueses del Valles (ES); CANALS RIBA, Antoni, E-08520 Les Franqueses del Valles (ES); BOQUET CARRETERO, Marçal, E-08520 Les Franqueses del Valles (ES); SELLS HIDALGO, Luis, E-08520 Les Franqueses del Valles (ES)
(74) Representative: Sugrañes Patentes y Marcas
(86) International application number: PCT/EP2007/001276
(87) International publication number: WO 2007/096079

(56) References cited:
- EP-A2- 1 134 128
- EP-A2- 1 344 691
- EP-A2- 1 479 578
- WO-A-97/28029
- DE-A1- 19 515 852
- GB-A- 2 347 388
- GB-A- 2 377 912

## Description

### Technical field of the invention

The invention relates to a system to disconnect the control pedal of a device, such as, for example the brake device of a vehicle, in the event of a head-on collision occurring, to minimize the damages that said pedal may cause to the driver when part of the vehicle structure supporting the pedal is deformed.

### Background of the invention

The current state of the art comprises different proposals designed to protect vehicle drivers, and in particular the lower part of their legs and feet, in the event of a head-on collision of the vehicle occurring which causes, due to the deformation of the vehicle structure which supports the pedals, a displacement of said pedals in the direction of the driver. In general, the known systems allow the pedals, in the event of said vehicle structure deforming, to be withdrawn in the opposite direction to the position held by the driver.

Usually, the control pedals of the brake or clutch devices in current vehicles are currently mounted with rotation capacity around a main shaft and its rotation movement around said shaft is transmitted to the corresponding devices by a rigid drive rod, articulately joined to the pedal. The known systems designed to protect drivers incorporate, in a known form, a rotation body supported in the deformable structure which is forced to rotate, if a collision occurs, on impacting and being pushed by a part of the structure which is more rigid and therefore, less deformable. The rotation of said rotation body triggers a series of actions which permit, as already mentioned, the displacement of the pedal in the opposite direction to the driver.

A type of system known for the protection of drivers in the event of an accident is based on providing the pedal with means for its disconnection from said rotation shaft, so that its movement, in the event of an accident, is subordinated to its connection with the drive rod. This is the case of systems disclosed in documents GB2391203 and EP1279563 and EP1479578, which shows all features of the preamble of claim 1.

In said documents, the drive rod is rotatably joined around a shaft, by means of a pin, to a lever solidly joined to the pedal by separable joining means, irreversibly, and rotatably mounted around the same main shaft. Said lever is, simultaneously pivotally joined around a shaft to the pedal at a point below its articulated joint with the drive rod, so that in the event of an accident, when the pedal is disconnected from the main rotation shaft and the joining means are deactivated, said pedal may freely rotate around its joint with the lever by the push of the driver foot. In these systems, although the pedal can freely rotate with respect to the drive rod in the event of collision, it is indirectly linked thereto by its joint with the lever.

Another type of known system is based on completely disconnecting the pedal from the drive rod, keeping it rotatory around the main shaft. This is the case of the system disclosed in document EP 1475275, wherein the drive rod is rotatably joined around a shaft in an intermediate point of a lever which, in tum, is rotatably joined around a secondary shaft, supported in the same deformable structure as the main shaft. In normal conditions, the lever is separably joined to the pedal, so that they are connected, but if a collision occurs, the rotation of the rotation body deactivates said joint, so that the pedal may freely rotate around the main shaft without its movement being restricted by that of said lever.

The known systems have some drawbacks such as the complexity of construction and its difficult installation in the vehicles, in particular with regard to the joint between the drive rod of the device and the pedal, an operation which is carried out in the vehicle assembly lines once the pedal has been mounted on the main shaft and the device on the vehicle structure. On the other hand, the known systems are particularly designed for their application in vehicles wherein the drive rod is joined to the pedal with the possibility of rotation around a shaft, when there are other types of coupling between said elements. In particular, there is a lack of a system which can also be installed in vehicles wherein the joint between the drive rod is provided with a spherical terminal and its joint with the pedal is of the ball type, wherein the rod may freely pivot with respect to the pedal according to a movement not necessarily inscribed in an imaginary plane.

### Explanation of the Invention

The system according to the invention overcomes the aforementioned drawbacks and is particularly applicable to pedals mounted with rotation capacity around a main shaft, the system comprising a drive rod of the device articulately joined to the pedal by coupling means so that, in normal conditions, the rotation movement of the pedal around the main shaft is transmitted to the drive rod and therefore to the device.

Essentially, the system is characterized in that it comprises a receiving body of an impact as a consequence of the head-on collision, provided with a cam portion, mounted with rotation capacity around the same main shaft, as well as separable joining means designed to keep the receiving body and the pedal solidly joined in normal conditions, forming a rigid block rotatable around the main shaft, and to be deactivated for the receiving body to receive an impact which exceeds a predetermined value, so that said joining means stop working and said receiving body is capable of freely rotating around the main shaft independently of the pedal, the cam portion of the receiving body being designed to perform a pushing action on the coupling means between the rod and the pedal in the event of a rotation of the receiving body occurring with respect to the pedal, which produces the decoupling and the separation between said rod and pedal, both being disconnected.

Unlike other known systems, the system according to the invention does not need a second rotation shaft since the receiving body and the pedal are pivotally mounted on the same shaft. Furthermore, in the event of impact, the pedal and the device are totally disconnected since the drive rod is completely separated from the pedal.

According to another characteristic of the invention, the coupling means comprises a guide element, solidly joined to the pedal, provided with two separated and opposite walls between which a support block is fastened firmly but separably by retaining means, articulately joined to the end of the rod, designed to receive said pushing action of the cam portion, all of this so that when the support block receives the pushing action of the cam portion, it is forced a move with respect to the guide element, separating therefrom.

In accordance with this characteristic, the support block acts as a link between the drive rod and the pedal, it being possible for the rod to be joined thereto by a single articulated joint, around a rotation shaft, or pivotally by a hinge or ball joint. The replacement of the support block to change the type of articulated joint with the drive rod does not affect the other system components.

According to another characteristic of the invention, the retaining means consists of portions of the guide element and the support block, interconnected by pressure.

Unlike other systems, the joint between the drive rod and the pedal, by means of the support block, can be reversible. Furthermore, specific tools or utensils are not needed for the coupling between the support blocks.

In accordance with another characteristic of the invention, the retaining means comprises a housing portion in the support block which tightly houses a corresponding detaching portion of similar configuration to that of the housing portion, solidly joined to at least one arm of the guide element.

In accordance with another characteristic of the invention, the retaining means comprises at least one protuberance disposed on the support block and tightly housed in a corresponding opening made in an arm of the guide body.

According to an embodiment, the guide element consists of a jaw rotatably mounted on a main shaft and solidly joined to the pedal.

In accordance with a variant of the invention, the pedal and the jaw are joined by a bushing coaxial to the main shaft and mounted with rotation capacity around it.

According to another characteristic of the invention, the receiving body is mounted with rotation capacity around the main shaft between the arms of the jaw.

In accordance with a variant of the invention, the separable joining means comprises welded joints between the receiving body and the jaw which, by way of breakable joints, break on being subjected to a force higher than a predetermined value.

According to another embodiment of the invention, the guide element is disposed in the interior of the pedal, being provided with a hole which permits the passage, by means of the pedal, of the support block secured between the walls of the guide element.

According to another characteristic of the invention, the end of the drive rod is provided with an outer spherical profile and the support block is provided with a housing, designed to tightly receive and with possibility of rotation said outer spherical profile of the end of the drive rod, so that the rod is pivotally joined to the support block.

### Brief description of the drawings

The attached drawings illustrate by way of non-limitative example, a preferred embodiment of the system of the invention. In said drawings:
- Fig. 1: is a perspective view of an embodiment of the system to the invention;
- Fig. 2,: is a side view of the system of Fig. 1;
- Fig. 3: is a side view, partially sectioned, of the system of Fig. 1 after a collision of the vehicle occurring, wherein it is observed that the support block is separated from the guide element which held it; and
- Fig. 4: is a perspective view of a pedal 2 according to another embodiment of the system.

### Detailed description of the drawings

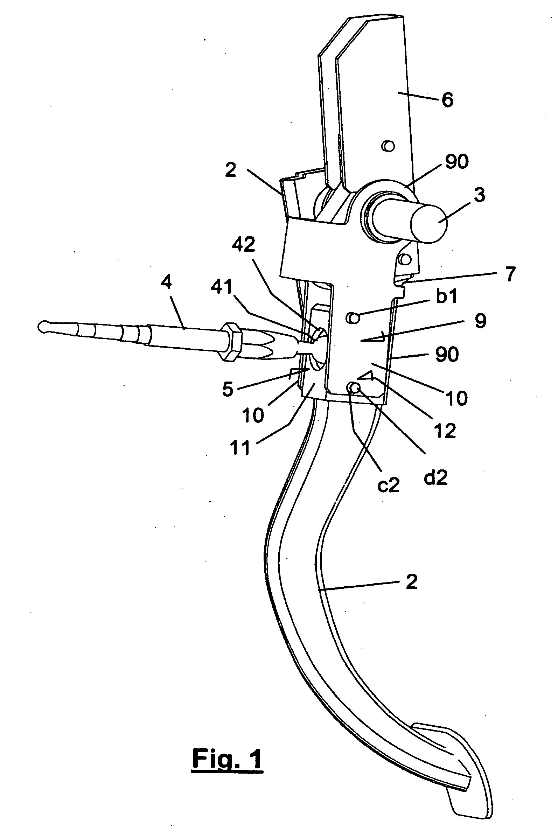

Figs. 1 to 3 have represented in detail an embodiment of the system according to the invention, applied to a pedal 2 of a motor vehicle which is mounted with rotation capacity around a main shaft 3. The rotation movement of the pedal 2 is transmitted to a device, not represented, by means of a drive rod 4, one of whose ends is connected, as will be explained further on, to said pedal 2, whilst its opposite end is connected to said device. Thus, when the pedal 2 receives the action of the driver's foot the force applied to the pedal 2 is transmitted, by means of the drive rod 4, to said device.

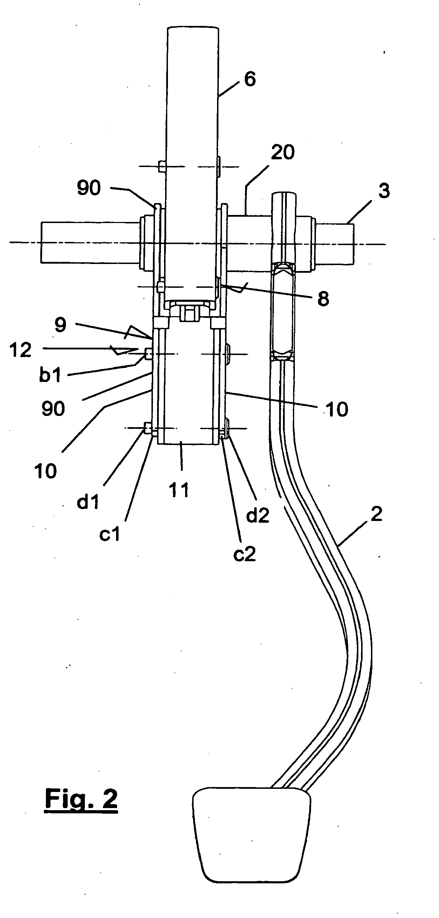

The pedal 2 represented in Figs. 1 to 3 is joined by a bushing 20, coaxial with the main shaft 3 and rotatable around it, to a guide element 9 constituted by a jaw 90 whose arms are traversed by the main shaft 3. The unit formed by the pedal 2, the bushing 20 and the jaw 90 forms a rigid block rotatable around the main shaft 3. As can be seen in Fig. 2, the pedal 2 and the jaw 90 are perpendicular to the main shaft 3 and are opposite one another.

The jaw 90 is provided with two walls 10, essentially flat, separated and opposite one another, between which is firmly held, by retaining means 12, a support block 11 articulately joined to one of the ends of the drive rod 4. In the example of Figs. 1 to 3, the support block is configured so that it tightly fits in the space determined by the walls 10 of the jaw 90, which acts by way of a guide so that the support block 11 is capable of moving inside it, according to a path determined by the guide, if the retaining means 12 do not act on the support block 11.

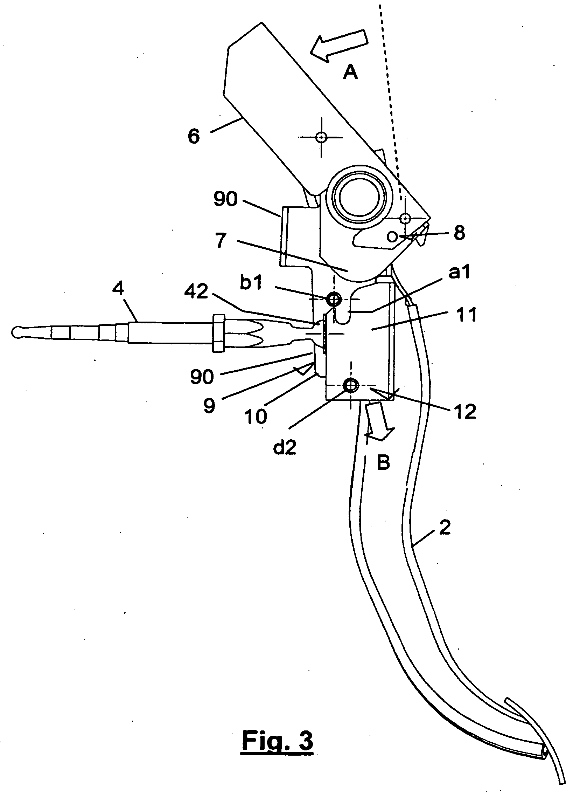

Said retaining means 12 consists of portions of the jaw 90 and the support block 11 interconnected by pressure. In particular, the support block is provided in its upper part with a housing portion a1 (see Fig. 3) constituted by a groove which transversally crosses the support block 11, parallel to the main shaft 3; while the jaw 90 is provided, between its walls 10, with a detaching portion b1 constituted by a pin of similar configuration to that of the groove a1 of the support block 11. The support block 11 is further provided in its lower part with two protuberances d1 and d2, each one symmetrically disposed in one of the sides of the support block 11 opposite the walls 10 of the jaw 90, whilst said walls 10 are provided in its lower edges with the corresponding openings c1 and c2.

In operating position, the pin b1 is tightly housed in the groove a1 whilst the protuberance d1 and d2 are housed, also tightly, in openings c1 and c2, respectively. It is anticipated that the opening of the groove a1 is narrower than the diameter of the pin b1 and that the passage of the openings c1 and c2 is considerably narrower than the width of the protuberances d1 and d2, so that the extraction of the pin b1 of the groove a1 and of the protuberances d1 and d2 of its corresponding openings c1 and c2 is performed in a forced manner, by plastic or elastic deformation of the support block 11 and/or of the profile of the openings c1 and c2.

It is of special interest that the support block 11 is secured to the jaw 90 by at least two points, each one disposed on one side of the articulated joint between the drive rod 4 and the support block 11 to guarantee that the reaction force that the drive rod 4 exerts on said support block 11, when the pedal is actuated by a driver, does not produce a movement which generates a rotation movement of the support block 11 around a single joint point between said support block 11 and the jaw 90.

The system represented in Figs. 1 to 3 further comprises a receiving body 6 of an impact as a consequence of a head-on collision of the vehicle. This receiving body 6 is mounted with rotation capacity around the main shaft 3, between the arms of the jaw 90, and is provided on its lower part with a cam portion 7 (see Figs. 1 and 3) opposite the support block 11 disposed immediately below said cam portion 7 and secured between the arms 10 of the jaw 90. Said cam portion 7 is designed to perform a pushing action on the support block 11 in the event of rotating a predetermined angle as detailed further on.

In normal conditions, as has been represented in Figs. 1 and 2, the receiving body 6 remains joined to the jaw 90 by separable joining means 8 which, in the represented embodiment, comprises breakable welded joints on being subjected to a force higher than a predetermined level. Thus, the unit formed by the receiving body 6, the jaw 90 and the pedal 2 form a rigid block rotatable around the main shaft 3.

In the event of a collision occurring, the main shaft 3 is displaced by deformation of the structure which supports it and the receiving body 6 impacts with part of the non-deformable vehicle structure, or deformable to a lesser extent than the part which supports the main shaft 3. As a consequence of the impact, the receiving body 6 is forced to rotate around the main shaft 3 in the direction indicated by the arrow A of Fig. 3, causing the breakage of the welded joints with the jaw 90 and allowing the rotation of the receiving body 6 with respect to the jaw 90. The profile of the cam portion 7 of the receiving body 6 is designed to contact and push the support block 11 when said receiving body 6 rotates, displacing it from its original position and decoupling it from the jaw 90 as indicated by the arrow B of Fig. 3. Naturally, the push force should be sufficient so that the detaching body b1 is extracted from the groove a1 and so that the protuberances d1 and d2 escape from the openings c1 and c2, respectively. When this occurs, the pedal 2 can freely rotate around the main shaft 3 independently of the path of the support block 11, joined to the drive rod 4. In other words, the pedal 2 is completely disconnected from the drive rod 4 and therefore from the device whereto it was connected.

In the embodiment of Figs. 1 to 3, the end of the drive rod 4 joined to the support block 11 is provided with an outer spherical profile 41 and the support block 11 is provided, in turn, with a housing 42, designed to tightly receive, and with possibility of rotation, said outer spherical profile of the end of the drive rod, so that the rod is pivotally joined to the support block 11. The fact that this type of coupling between the support block 11 and the drive rod 4 is of ball or spherical type, does not affect the correct functioning of the system when a collision situation occurs since the displacement of the support block 11 is guided by the walls 10 of the guide element 9, and in this particular case by the jaw 90.

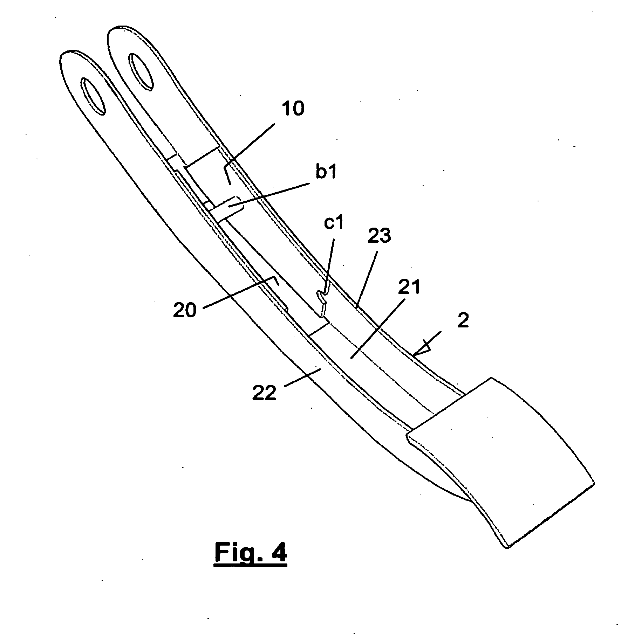

In the embodiment of Fig. 4, the pedal 2 body consists of a U-shaped cross-section profile formed by a base 21 and by two opposite flat side walls 22 and 23, which are perpendicularly raised with respect to the base 21. It can be observed that the guide element 9 is disposed inside the pedal 2 and which is provided, as in the previous embodiment, with a pin b1 disposed between the walls 10 of said guide element 9. Said walls 10 are also provided in their lower edges with respective openings c1 and c2 designed to a tightly receive corresponding protuberances of the support block 11 (not represented) similarly to the system according to Figs. 1 to 3. To permit the coupling between the support block 11 and the guide element 9, and therefore between the support block 11 and the pedal 2, by the rear part of the pedal 2, the base 21 of the pedal 2 is provided with a hole 20, by way of a window. As the pedal 2 does not have a front face, in the event of a collision occurring, the support block 11, once the guide element 9 is decoupled, can exit through the front part of the pedal with no obstacles.

It is understood that the guide element 9, constituted by a jaw 90 which can swing around the main shaft 3 in the first embodiment, and by respective walls 10 abutted to respective walls 22 and 23 of the pedal 2 in the second embodiment, it can be joined to the pedal 2 in any other form, either in its inside, or abutted to one side or solidly joined to the pedal 2 without being traversed by the main shaft 3. With respect to the receiving body 6, its location can also vary provided that it has a cam portion 7 designed to perform a pushing action in the event of rotating with respect to the guide element 9.

## Claims

1. System (1) to disconnect a control pedal (2) of a device, in a vehicle, from the device whereto the pedal is connected, in the event of head-on collision of the vehicle, particularly applicable to pedals which receive the action of the foot and transmit the force from this to said device, the pedal being mounted with rotation capacity around a main shaft (3), the system comprising a drive rod (4) of the device articulately joined to the pedal by coupling means (5), so that, in normal conditions, the rotation movement of the pedal around the main shaft is transmitted to the drive rod and therefore to the device, the system further comprising
- a receiving body (6) of an impact as a consequence of the head-on collision, provided with a cam portion (7), mounted with rotation capacity around the same main shaft; and
- separable joining means (8) designed to keep the receiving body (6) and the pedal (2) solidly joined in normal conditions forming a rigid block rotatable around the main shaft, and to be deactivated when the receiving body receives an impact which exceeds a predetermined value, so that said joining means stop working and said receiving body is capable of freely rotating around the main shaft independently of the pedal,
the cam portion of the receiving body being designed to perform a pushing action on the coupling means between the rod and the pedal in the event of a rotation of the receiving body occurring with respect to the pedal, which produces the decoupling and the separation between said rod and pedal, both remaining disconnected,
**characterized in that** the coupling means (5) comprises a guide element (9), solidly joined to the pedal (2), provided with two separated and opposite walls (10) between which is fastened firmly but separably, by retaining means (12), a support block (11), articulately joined to the end of the rod (4), designed to receive said pushing action of the cam portion (7), all of this so that when the support block receives the pushing action of the cam portion, it is forced to move with respect to the guide element, separating therefrom.

2. System according to claim 1, **characterized in that** the retaining means (12) consists of portions of the guide element (9) and the support block (11), interconnected by pressure.

3. System according to claim 2, **characterized in that** the retaining means (12) comprises a housing portion (a1) in the support block (11) which tightly houses a corresponding detaching portion (b1) of similar configuration to that of the housing portion, solidly joined to at least one wall (10) of the guide element (9).

4. System according to claims 2 or 3, **characterized in that** the retaining means (12) comprises at least one protuberance (d1, d2) disposed on the support block (11) and tightly housed in a corresponding opening (c1, c2) made in a wall (10) of the guide body (9).

5. System according to claims 1 to 4, **characterized in that** the guide element (9) consists of a jaw (90) rotatably mounted on the main shaft (3) and solidly joined to the pedal (2).

6. System according to claim 5, **characterized in that** the pedal (2) and the jaw (90) are joined by a bushing (20) coaxial to the main shaft (3) and freely rotating around them.

7. System according to claims 5 or 6, **characterized in that** the receiving body (6) is mounted with rotation capacity around the main shaft (3) between the walls (10) of the jaw (90).

8. System according to claims 5 to 7, **characterized in that** the separable joining means (8) comprises welded joints between the receiving body (6) and the jaw (90) which, by way of breakable joints, break on being subjected to a force higher than a predetermined value.

9. System according to claims 1 to 4, **characterized in that** the guide element (9) is disposed in the interior of the pedal (2), being provided with a hole (20) which permits the passage, by means of the pedal, of the support block (11) secured between the walls (10) of the guide element.

10. System according to claims 1 to 9, **characterized in that** the end (40) of the drive rod (4) is provided with an outer spherical profile (41) and **in that** the support block (11) is provided with a housing (42), designed to receive tightly and with possibility of rotation said outer spherical profile of the end of the drive rod, so that the rod is pivotally joined to the support block (11).

## Patentansprüche

1. System (1) zum Trennen eines Steuerpedals (2) einer Vorrichtung in einem Fahrzeug von der Vorrichtung, mit der das Pedal verbunden ist, im Falle eines Frontalaufpralls des Fahrzeugs, insbesondere anwendbar auf Pedale, welche die Einwirkung des Fußes aufnehmen und die Kraft von diesem auf die Vorrichtung übertragen, wobei das Pedal um eine Hauptwelle (3) drehbar angebracht ist, wobei des System eine Antriebsstange (4) der Vorrichtung umfasst, die durch Kupplungsmittel (5) gelenkig mit dem Pedal verbunden ist, so dass unter normalen Bedingungen die Drehbewegung des Pedals um die Hauptwelle auf die Antriebsstange und daher auf die Vorrichtung übertragen wird, wobei das System ferner umfasst
- einen Aufnahmekörper (6) zur Aufnahme eines Stoßes infolge des Frontalaufpralls, der mit einem Nockenabschnitt (7) versehen ist, der um dieselbe Hauptwelle drehbar angebracht ist; und
- trennbare Verbindungsmittel (8), die dazu bestimmt sind, den Aufnahmekörper (6) und das Pedal (2) unter normalen Bedingungen fest verbunden zu halten, so dass sie einen um die Hauptwelle drehbaren starren Block bilden, und deaktiviert zu werden, wenn der Aufnahmekörper einen Stoß aufnimmt, welcher einen vorbestimmten Wert überschreitet, so dass die Verbindungsmittel aufhören zu funktionieren und der Aufnahmekörper in der Lage ist, unabhängig von dem Pedal frei um die Hauptwelle zu rotieren,
wobei der Nockenabschnitt des Aufnahmekörpers dazu bestimmt ist, falls eine Rotation des Aufnahmekörpers bezüglich des Pedals erfolgt, eine Schubwirkung auf die Kupplungsmittel zwischen der Stange und dem Pedal auszuüben, welche die Entkupplung und die Trennung zwischen der Stange und dem Pedal bewirkt, wobei beide gelöst bleiben, **dadurch gekennzeichnet, dass** das Kupplungsmittel (5) ein mit dem Pedal (2) fest verbundenes Führungselement (9) aufweist, das mit zwei getrennten und gegenüberliegenden Wänden (10) versehen ist, zwischen welchen durch Haltemittel (12) ein Stützblock (11) fest, jedoch trennbar befestigt ist, der gelenkig mit dem Ende der Stange (4) verbunden und dazu bestimmt ist, die Schubwirkung des Nockenabschnitts (7) aufzunehmen, derart, dass, wenn der Stützblock die Schubwirkung des Nockenabschnitts aufnimmt, er gezwungen wird, sich bezüglich des Führungselements zu bewegen und sich dabei von ihm zu trennen.

2. System nach Anspruch 1, **dadurch gekennzeichnet, dass** das Haltemittel (12) aus Abschnitten des Führungselements (9) und des Stützblockes (11) besteht, die durch Druck miteinander verbunden sind.

3. System nach Anspruch 2, **dadurch gekennzeichnet, dass** das Haltemittel (12) einen Gehäuseabschnitt (a1) in dem Stützblock (11) aufweist, welcher einen entsprechenden Löseabschnitt (b1) mit einer zu der des Gehäuseabschnitts ähnlichen Konfiguration dicht aufnimmt, der mit mindestens einer Wand (10) des Führungselements (9) fest verbunden ist.

4. System nach Anspruch 2 oder 3, **dadurch gekennzeichnet, dass** das Haltemittel (12) mindestens einen Vorsprung (d1, d2) aufweist, der an dem Stützblock (11) angeordnet und in einer entsprechenden Öffnung (c1, c2), die in einer Wand (10) des Führungselements (9) hergestellt ist, dicht aufgenommen ist.

5. System nach Anspruch 1 bis 4, **dadurch gekennzeichnet, dass** das Führungselement (9) aus einer Backe (90) besteht, die drehbar auf der Hauptwelle (3) angebracht und mit dem Pedal (2) fest verbunden ist.

6. System nach Anspruch 5, **dadurch gekennzeichnet, dass** das Pedal (2) und die Backe (90) durch eine Buchse (20) verbunden sind, die koaxial zur Hauptwelle (3) ist und frei um sie rotiert.

7. System nach Anspruch 5 oder 6, **dadurch gekennzeichnet, dass** der Aufnahmekörper (6) um die Hauptwelle (3) drehbar zwischen den Wänden (10) der Backe (90) angebracht ist.

8. System nach Anspruch 5 bis 7, **dadurch gekennzeichnet, dass** die trennbaren Verbindungsmittel (8) Schweißverbindungen zwischen dem Aufnahmekörper (6) und der Backe (90) aufweisen, welche mittels brechbarer Verbindungen brechen, wenn sie einer Kraft ausgesetzt werden, die größer als ein vorbestimmter Wert ist.

9. System nach Anspruch 1 bis 4, **dadurch gekennzeichnet, dass** das Führungselement (9) im Inneren des Pedals (2) angeordnet ist, wobei es mit einem Loch (20) versehen ist, welches mittels des Pedals die Hindurchbewegung des Stützblockes (11) ermöglicht, der zwischen den Wänden (10) des Führungselements befestigt ist.

10. System nach Anspruch 1 bis 9, **dadurch gekennzeichnet, dass** das Ende (40) der Antriebsstange (4) mit einem äußeren kugelförmigen Profil (41) versehen ist, und dass der Stützblock (11) mit einem Gehäuse (42) versehen ist, das dazu bestimmt ist, das äußere kugelförmige Profil des Endes der Antriebsstange dicht und drehbar aufzunehmen, so dass die Stange mit dem Stützblock (11) drehgelenkig verbunden ist.

## Revendications

1. Système (1) pour déconnecter une pédale de commande (2) d'un dispositif, dans un véhicule, à partir du dispositif auquel la pédale est connectée, dans le cas d'une collision frontale du véhicule, particulièrement applicable à des pédales qui reçoivent l'action du pied et transmettent la force de celui-ci audit dispositif, la pédale étant montée avec une capacité de rotation autour d'un arbre principal (3), le système comprenant une tige d'entraînement (4) du dispositif uni de manière articulée à la pédale par des moyens d'accouplement (5), de manière que, dans des conditions normales, le mouvement de rotation de la pédale autour de l'arbre principal soit transmis à la tige d'entraînement et par conséquent au dispositif, le système comprenant, en outre
- un corps de réception (6) d'un impact comme conséquence de la collision frontale, pourvu d'une partie de came (7), monté avec capacité de rotation autour du même arbre principal ; et
- des moyens d'union séparables (8) destinés à maintenir le corps de réception (6) et la pédale (2) solidement unis dans des conditions normales en formant un bloc rigide susceptible de tourner autour de l'arbre principal, et à être désactivés lorsque le corps de réception reçoit un impact qui dépasse une valeur prédéterminée, de manière que lesdits moyens d'union cessent de fonctionner et ledit corps de réception est capable de tourner librement autour de l'arbre principal indépendamment de la pédale,
la partie de came du corps de réception étant destinée à réaliser une action de poussée sur les moyens d'accouplement entre la tige et la pédale dans le cas où une rotation du corps de réception ait lieu par rapport de la pédale, ce qui produit le désaccouplement et la séparation entre ladite tige et ladite pédale, les deux demeurant déconnectées, **caractérisé en ce que** les moyens d'accouplement (5) comprennent un élément de guidage (9) solidement uni à la pédale (2), pourvus de deux parois séparées et opposées (10) entre lesquelles est fixé ferment mais amoviblement, par des moyens de retenue (12), un bloc de support (11) uni de manière articulée à l'extrémité de la tige (4), destiné à la réception de ladite action de poussée de la partie de came (7), tous ceci étant ainsi de manière que lorsque le bloc de support reçoit l'action de poussé de la partie de came, il est obligé de se déplacer par rapport à l'élément de guidage, en se séparant de celui-ci.

2. Système selon la revendication 1, **caractérisé en ce que** le moyen de retenue (12) consiste en des portions de l'élément de guidage (9) et le bloc de support (11) interconnectés à pression.

3. Système selon la revendication 2, **caractérisé en ce que** le moyen de retenue (12) comprend une partie de logement (a1) dans le bloc de support (11) qui loge de manière ajustée une partie de détachement (b1) correspondante d'une configuration similaire à celle de la partie de logement, solidement unie à au moins une paroi (10) de l'élément de guidage (9).

4. Système selon les revendications 2 ou 3, **caractérisé en ce que** le moyen de retenue (12) comprend au moins une protubérance (d1, d2) disposée sur le bloc de support (11) et logée de manière ajustée dans une ouverture (c1, c2) correspondante aménagée dans une paroi (10) du corps de guidage (9).

5. Système selon les revendications 1 à 4, **caractérisé en ce que** l'élément de guidage (9) consiste en une mâchoire (90) montée avec rotation sur l'arbre principal (3) et solidement unie à la pédale (2).

6. Système selon la revendication 5, **caractérisé en ce que** la pédale (2) et la mâchoire (90) sont unies par une douille (20) coaxiale à l'arbre principal (3) et tournant librement autour de celles-ci.

7. Système selon les revendications 5 ou 6, **caractérisé en ce que** le corps de réception (6) est monté avec capacité de rotation autour de l'arbre principal (3) entre les parois (10) de la mâchoire (90).

8. Système selon les revendications 5 à 7, **caractérisé en ce que** les moyens d'union séparables (8) comprennent des joints soudés entre le corps de réception (6) et la mâchoire (90) lesquels, au moyen de joints cassables, se cassent lorsqu'ils sont soumis à une force supérieure à une valeur prédéterminée.

9. Système selon les revendications 1 à 4, **caractérisé en ce que** l'élément de guidage (9) est disposé à l'intérieur de la pédale (2), en étant pourvu d'un trou (20) qui permet le passage, au moyen de la pédale, du bloc de support (11) supporté entre les parois (10) de l'élément de guidage.

10. Système selon les revendications 1 à 9, **caractérisé en ce que** l'extrémité (40) de la tige d'entraînement (4) est pourvue d'un profilé sphérique extérieur (41) et **en ce que** le bloc de support (11) est pourvu d'un logement (42) destiné à recevoir de manière ajustée et avec possibilité de rotation ledit profilé sphérique extérieur de l'extrémité de la tige d'entraînement, de manière à ce que la tige est unie de manière pivotante au bloc de support (11).
